(19) **Europäisches Patentamt**
**European Patent Office**
**Office européen des brevets**

(11) **EP 4 756 394 A1**

(12) **EUROPÄISCHE PATENTANMELDUNG**

(43) Veröffentlichungstag:
**10.06.2026 Patentblatt 2026/24**

(51) Internationale Patentklassifikation (IPC):
**G01L 9/00** (2006.01)

(21) Anmeldenummer: **25216996.6**

(52) Gemeinsame Patentklassifikation (CPC):
**G01L 9/008**

(22) Anmeldetag: **19.11.2025**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **06.12.2024 EP 24217955**

(71) Anmelder: **Kistler Holding AG
8408 Winterthur (CH)**

(72) Erfinder:
• **Pirouz, Sohi
8400 Winterthur (CH)**
• **Oldrati, Hanspeter
9545 Wängi (CH)**
• **Sommer, Roland
8413 Neftenbach (CH)**
• **Der weitere Erfinder hat auf sein Recht
verzichtet, als solcher bekannt gemacht zu
werden.**

(54) **SENSORVORRICHTUNG**

(57)   Die Erfindung betrifft eine zur Messung eines Druckes (P) eingerichtete Sensorvorrichtung (1); mit mindestens einem Grundkörper (10) und mindestens einem Sensormaterial (20); welcher Grundkörper (10) bereichsweise als Grundkörpermembran (11) ausgeformt ist, welche Grundkörpermembran (11) entlang einer Vertikalachse (Z) eine Dicke (T11) und in einer Horizontalebene (XY) senkrecht zur Vertikalachse (Z) einen Durchmesser (D11) aufweist; welche Grundkörpermembran (11) eingerichtet ist, den zu messenden Druck (P) aufzunehmen und welche Grundkörpermembran (11) unter der Wirkung des Druckes (P) entlang der Vertikalachse (Z) auslenkbar ist; wobei das Sensormaterial (20) auf der Grundkörpermembran (11) angeordnet ist, welches Sensormaterial (20) durch die Auslenkung der Grundkörpermembran (101) piezoelektrische Ladung (Q20+, Q20-) erzeugt und eine Menge der erzeugten piezoelektrischen Ladung (Q20+, Q20-) proportional zur Grösse des gemessenen Druckes (P) ist; wobei die Dicke (T11) der Grundkörpermembran (11) kleiner/gleich 20 µm, vorzugsweise kleiner/gleich 10 µm, vorzugsweise kleiner/gleich 5 µm ist; wobei der Durchmesser (D11) der Grundkörpermembran (11) kleiner/gleich 300 µm, vorzugsweise kleiner/gleich 200 µm, vorzugsweise kleiner/gleich 100 µm ist; und wobei ein Verhältnis von Dicke (T11) zu Durchmesser (D11) der Grundkörpermembran (11) so gewählt ist, dass die Sensorvorrichtung (1) eine Eigenfrequenz (f1) von grösser/gleich 1 MHz aufweist.

Fig. 1

EP 4 756 394 A1

## Beschreibung

### Technisches Gebiet

Die Erfindung betrifft eine Sensorvorrichtung gemäss dem Oberbegriff des unabhängigen Anspruches.

### Stand der Technik

Sensorvorrichtungen sind bekannt. Sie werden vielfältig angewendet, um einen Druck, eine Temperatur, usw. zu messen.

So sind Sensorvorrichtungen bekannt, welche einen Druck nach dem piezoelektrischen Messprinzip messen. Dazu weisen sie piezoelektrisches Material wie Quarz ($SiO_2$), Galliumorthophosphat ($GaPO_4$), usw. auf, welches unter der Wirkung des zu messenden Druckes piezoelektrische Ladungen erzeugt. Die piezoelektrischen Ladungen werden auf Oberflächen des piezoelektrischen Materials erzeugt und mittels Elektroden abgegriffen. Die Menge der erzeugten piezoelektrischen Ladungen ist proportional zur Grösse des gemessenen Druckes.

Piezoelektrisches Material wie $SiO_2$ und $GaPO_4$ weist eine sehr hohe Profilsteifigkeit auf. Aufgrund dieser sehr hohen Profilsteifigkeit besitzen piezoelektrische Sensorvorrichtungen dann eine grosse Eigenfrequenz von mehr als 500 kHz. Durch diese grosse Eigenfrequenz sind piezoelektrische Sensorvorrichtungen für dynamische Messungen des Druckes prädestiniert. In der Regel liegt die maximale Messfrequenz bei 1/3 der Eigenfrequenz.

Solch eine piezoelektrische Sensorvorrichtung zur dynamischen Messung des Druckes wird von der Anmelderin unter der Bezeichnung Typ 603C vertrieben. Beim Typ 603C ist das piezoelektrische Material in Form von mehreren Scheiben in Axialrichtung gesehen, durch eine Bodenplatte von einer Membran beabstandet. Der zu messende Druck wirkt über die Membran und die Bodenplatte als Kraft auf das piezoelektrische Material. Da das piezoelektrische Material wie $SiO_2$ und $GaPO_4$ spröde ist und unter lokalen Druckspitzen brechen kann, stellt die Bodenplatte eine gleichmässige Verteilung des Druckes auf das piezoelektrische Material sicher. Die maximale Messfrequenz des Typ 603C liegt bei rund 200 kHz. Die technische Spezifikation des Typs 603C ist im Datenblatt 603C_003-288e-11.22 dokumentiert.

Nun ist es Wunsch der Anwender von Sensorvorrichtungen zur Messung des Druckes, die Messfrequenz weiter zu erhöhen.

Aufgabe der vorliegenden Erfindung ist es, eine Sensorvorrichtung bereitzustellen, welche für die Messung des Druckes eine Messfrequenz von deutlich mehr als 200 kHz aufweist.

### Darstellung der Erfindung

Diese Aufgabe wird durch die Merkmale des unabhängigen Anspruches gelöst.

Die Erfindung betrifft eine zur Messung eines Druckes eingerichtete Sensorvorrichtung; mit mindestens einem Grundkörper und mindestens einem Sensormaterial; welcher Grundkörper bereichsweise als Grundkörpermembran ausgeformt ist, welche Grundkörpermembran entlang einer Vertikalachse eine Dicke und in einer Horizontalebene senkrecht zur Vertikalachse einen Durchmesser aufweist; welche Grundkörpermembran eingerichtet ist, den zu messenden Druck aufzunehmen und welche Grundkörpermembran unter der Wirkung des Druckes entlang der Vertikalachse auslenkbar ist; welches Sensormaterial auf der Grundkörpermembran angeordnet ist und durch die Auslenkung der Grundkörpermembran piezoelektrische Ladung erzeugt und eine Menge der erzeugten piezoelektrischen Ladung proportional zur Grösse des gemessenen Druckes ist; wobei die Dicke der Grundkörpermembran kleiner/gleich 20 $\mu$m, vorzugsweise kleiner/gleich 10 $\mu$m, vorzugsweise kleiner/gleich 5 $\mu$m ist; wobei der Durchmesser der Grundkörpermembran kleiner/gleich 300 $\mu$m, vorzugsweise kleiner/gleich 200 $\mu$m, vorzugsweise kleiner/gleich 100 $\mu$m ist; und wobei ein Verhältnis von Dicke zu Durchmesser der Grundkörpermembran so gewählt ist, dass die Sensorvorrichtung eine Eigenfrequenz von grösser/gleich 1 MHz aufweist.

Vorteilhafte Weiterbildungen der Erfindung sind in den abhängigen Ansprüchen geschützt.

### Kurze Beschreibung der Zeichnungen

Im Folgenden wird die Erfindung beispielhaft unter Beizug der Figuren näher erklärt. Es zeigen

Fig. 1     eine Draufsicht eines Teils einer ersten Ausführungsform einer Sensorvorrichtung 1 mit einem Drucksensor 1P zur Messung eines Druckes P;

Fig. 2     einen Querschnitt eines Teils der Sensorvorrichtung 1 gemäss Fig. 1 entlang eines Schnittverlaufes A - A;

Fig. 3     eine Draufsicht eines Teils einer zweiten Ausführungsform einer Sensorvorrichtung 1 mit einer Gruppe von Drucksensoren 1P gemäss Fig. 1;

Fig. 4     einen schematischen Schaltplan eines Teils der ersten Ausführungsform der Sensorvorrichtung 1 mit einem Drucksensor 1P gemäss Fig. 1 oder 2, mit einer Ableitung 5, mit einer Wandlereinheit 6 und mit einer Auswerteeinheit 7; und

Fig. 5 einen schematischen Schaltplan eines Teils der zweiten Ausführungsform der Sensorvorrichtung 1 mit einer Gruppe von Drucksensoren 1P gemäss Fig. 3, mit einer Ableitung 5, mit einer Wandlereinheit 6 und mit einer Auswerteeinheit 7.

Gleiche Bezugszeichen bezeichnen in den Figuren gleiche Gegenstände.

**Wege zur Ausführung der Erfindung**

Die Sensorvorrichtung 1 hat die Funktion einen Druck P zu messen.

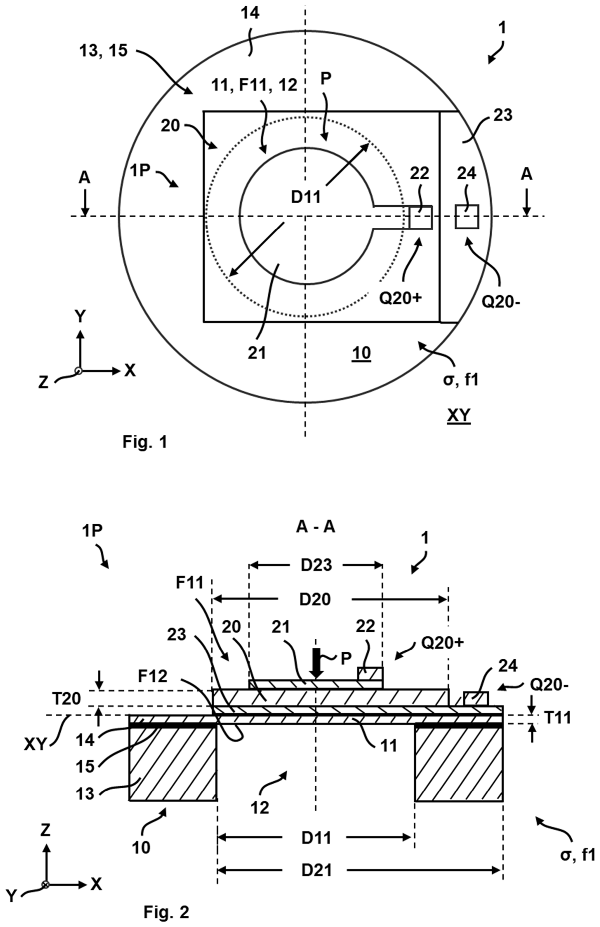

Gemäss der Ausführungsformen der Fig. 1 bis 3 weist die Sensorvorrichtung 1 mindestens einen Drucksensor 1P zur Messung des Druckes P auf.

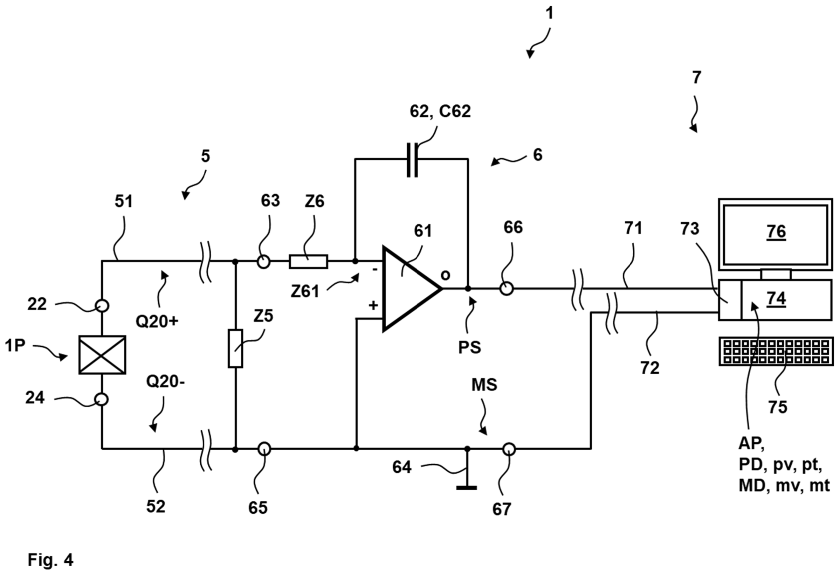

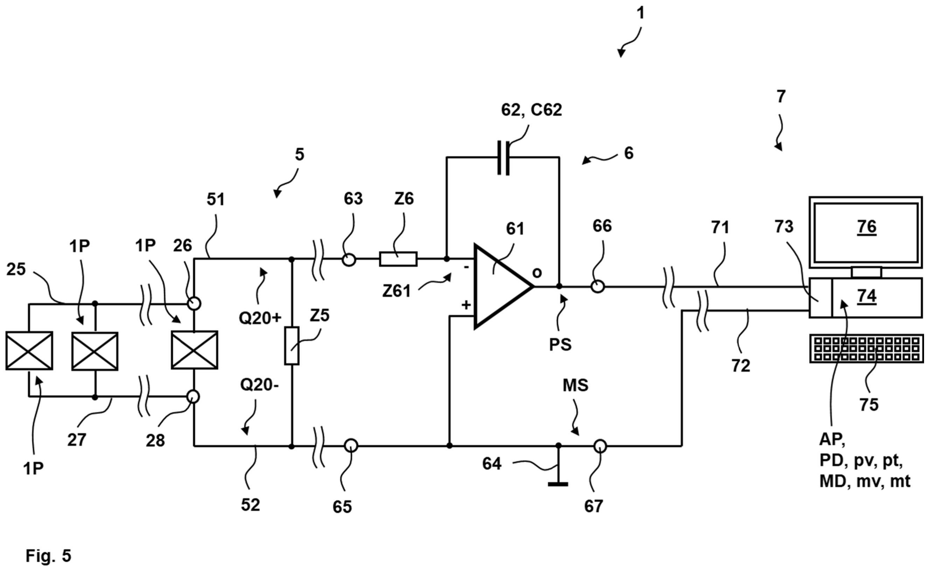

Weiter weist die Sensorvorrichtung 1 gemäss den Fig. 4 und 5 mindestens eine Ableitung 5, mindestens einen Wandlereinheit 6 und mindestens eine Auswerteeinheit 7 auf.

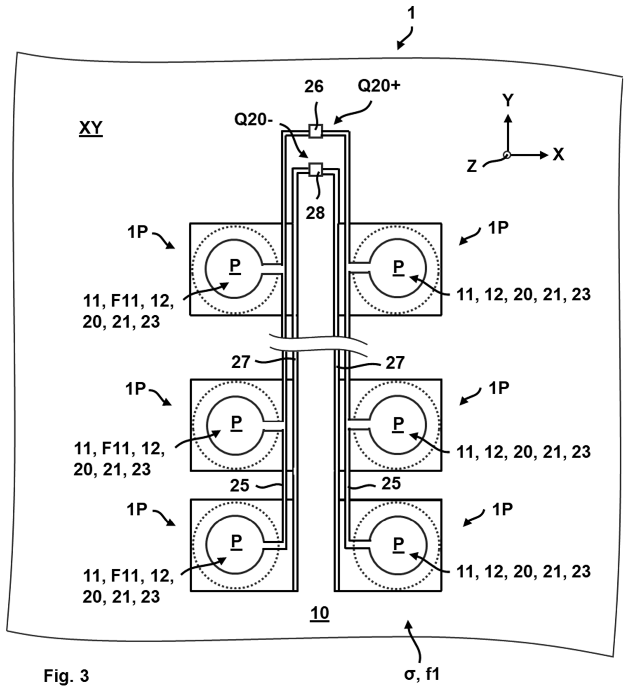

In den Fig. 1 bis 3 ist die Sensorvorrichtung 1 in einem dreidimensionalen Koordinatensystem mit einer Horizontalachse X, einer Schrägachse Y und einer Vertikalachse Z dargestellt. Die drei Achsen X, Y, Z stehen senkrecht aufeinander. Die Horizontalachse X und die Schrägachse Y spannen eine Horizontalebene XY auf. Die Fig. 1 und 3 zeigen Ausführungsformen der Sensorvorrichtung 1 in Draufsicht in der Horizontalebene XY. Die Fig. 2 zeigen die Sensorvorrichtung 1 im Querschnitt.

DER GRUNDKÖRPER 10

Die Sensorvorrichtung 1 weist mindestens einen Grundkörper 10 auf. Der Grundkörper 10 hat die Funktion, den zu messenden Druck P aufzunehmen.

Der Grundkörper 10 besteht aus elektrisch isolierendem Material wie Silizium, Glas, usw. Silizium hat bei Raumtemperatur (20 °C) einen spezifischen elektrischen Widerstand von grösser/gleich $10^7$ $\Omega$m. Glas hat bei 20° C einen spezifischen elektrischen Widerstand von grösser/gleich $10^{11}$ $\Omega$m.

Der Grundkörper 10 weist eine Vorderseite und eine Rückseite auf. Auf der Vorderseite bildet der Grundkörper 10 eine Tragfläche aus. Die Tragfläche liegt in der Horizontalebene XY. Die Tragfläche ist kleiner/gleich 3 mm * 3 mm, vorzugsweise kleiner/gleich 2 mm * 2 mm. Auf der Rückseite bildet der Grundkörper 10 eine Grundkörperöffnung 12 aus.

Vorzugsweise ist der Grundkörper 10 ein Silicon-On-Insulator (SOI) mit den folgenden funktionellen Schichten:

- Eine Tragschicht 13 besteht aus Silizium und weist entlang der Vertikalachse Z eine Dicke im Bereich 200 bis 500 $\mu$m, vorzugsweise weist sie eine Dicke von 400 $\mu$m auf. Die Tragschicht 13 hat eine Tragfunktion für Komponenten der Sensorvorrichtung 1.

- Eine Grenzschicht 14 aus Silizium weist entlang der Vertikalachse Z eine Dicke im Bereich von 100 bis 2 $\mu$m, vorzugsweise weist sie eine Dicke von 50 $\mu$m auf, vorzugsweise weist sie eine Dicke von 5 $\mu$m auf. Die Grenzschicht 14 hat die Funktion, bereichsweise eine Grundkörpermembran 11 zu bilden. Die Grenzschicht 14 begrenzt den Grundkörper 10 in der Horizontalebene XY.

- Eine Stoppschicht 15 weist entlang der Vertikalachse Z eine Dicke von 1 $\mu$m Dicke auf und ist entlang der Vertikalachse Z zwischen der Tragschicht 13 und der Grenzschicht 14 angeordnet. Die Stoppschicht 15 besteht aus einem Oxidmaterial und hat bei 20° C einen spezifischen elektrischen Widerstand von grösser/gleich $10^{12}$ $\Omega$m. Die Stoppschicht 15 hat deshalb die Funktion, die Grenzschicht 14 elektrisch gegenüber der Tragschicht 13 zu isolieren. Die Stoppschicht 15 hat die weitere Funktion eines Ätzstopps bei der Herstellung der Grundkörperöffnung 12 durch chemisches Ätzen im Grundkörper 10. Dabei wird auf der Rückseite des Grundkörpers 10 Silizium entlang der Vertikalachse Z bis zur Stoppschicht 15 weggeätzt.

Die Grundkörpermembran 11 ist eingerichtet, den zu messende Druck P aufzunehmen. Die Grundkörpermembran 11 weist zwei Oberflächen F11, F12 auf. Die zwei Oberflächen F11, F12 umfassen eine vordere Oberfläche F11 und eine hintere Oberfläche F12. Die vordere Oberfläche F11 liegt auf der Vorderseite des Grundkörpers 10 in der Horizontalebene XY. Der Druck P wirkt entlang der Vertikalachse Z auf die vordere Oberfläche F11. Die vordere Oberfläche F11 ist der Richtung, in der der Druck P wirkt, zugewandt. Die hintere Oberfläche der Grundkörpermembran 11 begrenzt auf der Rückseite des Grundkörpers 10 die Grundkörperöffnung 12. Unter der Wirkung des Druckes P ist die Grundkörpermembran 11 entlang der Vertikalachse Z in die Grundkörperöffnung 12 auslenkbar.

Die Grundkörpermembran 11 weist eine Dicke T11 kleiner/gleich 20 $\mu$m, vorzugsweise kleiner/gleich 10 $\mu$m, vorzugsweise kleiner/gleich 5 $\mu$m auf. Die Grundkörpermembran 11 weist einen Durchmesser D11 kleiner/gleich 300 $\mu$m, vorzugsweise kleiner/gleich 200 $\mu$m, vorzugsweise kleiner/gleich 100 $\mu$m auf. Das Verhältnis von Dicke T11 zu Durchmesser D11 der Grundkörpermembran 11 ist so gewählt, dass die Sensorvorrichtung 1 eine Eigenfrequenz f1 von grösser/gleich 1 MHz aufweist. Vorteilhafterweise ist das Verhältnis von Dicke T11 zu Durchmesser D11 der Grundkörpermembran 11 im Bereich von $1.7 \cdot 10^{-2}$ bis $5.0 \cdot 10^{-2}$. Beispielhafte Verhältnisse von Dicke T11 zu Durchmesser D11 der Grundkörpermembran 11 führen zu den folgenden Eigenfrequenzen f1:

- Für eine Dicke T11 der Grundkörpermembran 11 gleich 5 $\mu$m und einen Durchmesser D11 der Grund-

körpermembran 11 gleich 300 $\mu$m resultieren ein Verhältnis von Dicke T11 zu Durchmesser D11 der Grundkörpermembran 11 gleich 1.7 $10^{-2}$ und eine Eigenfrequenz f1 von grösser 1 MHz.

- Für eine Dicke T11 der Grundkörpermembran 11 gleich 5 $\mu$m und einen Durchmesser D11 der Grundkörpermembran 11 gleich 200 $\mu$m resultieren ein Verhältnis von Dicke T11 zu Durchmesser D11 der Grundkörpermembran 11 gleich 2.5 $10^{-2}$ und eine Eigenfrequenz f1 von grösser 2.5 MHz.

- Für eine Dicke T11 der Grundkörpermembran 11 gleich 5 $\mu$m und einen Durchmesser D11 der Grundkörpermembran 11 gleich 100 $\mu$m resultieren ein Verhältnis von Dicke T11 zu Durchmesser D11 der Grundkörpermembran 11 gleich 5.0 $10^{-2}$ und eine Eigenfrequenz f1 von grösser 10 MHz.

Im Unterschied zur piezoelektrischen Sensorvorrichtung des Typs 603C, welche eine metallische Membran aus dem Edelstahl 17-4PH aufweist, besteht die erfindungsgemässe Grundkörpermembran 11 aus Silizium. Im Vergleich zum Edelstahl 17-4PH, welcher eine Dichte von 7.8 g/cm$^3$ aufweist, weist Silizium eine Dichte von und 2.3 g/cm$^3$ auf. Somit ist die erfindungsgemässe Grundkörpermembran 11 mehr als dreimal leichter, was die Eigenfrequenz f1 der Sensorvorrichtung 1 weiter erhöht.

DAS SENSORMATERIAL 20

Die Sensorvorrichtung 1 weist mindestens ein Sensormaterial 20 auf. Das Sensormaterial 20 hat die Funktion, für den zu messenden Druck P einen Messwert zu erzeugen.

Das Sensormaterial 20 ist piezoelektrisch und besteht aus Quarz ($SiO_2$), Galliumorthophosphat (Ga-$PO_4$), CalciumGalloGermanat ($Ca_3Ga_2Ge_4O_{14}$ oder CGG), Langasit ($La_3Ga_5SiO_{14}$ oder LGS), Turmalin, Aluminiumnitrid (AlN), Blei-Zirkonat-Titanate (PZT), Aluminiumscandiumnitrid (Al(1-x)Sc(x)N mit x=0...0.4), Kalium-Natrium-Niobat (K(x)Na(1-x)NbO3 mit x=0.2...0.5), usw.

Das Sensormaterial 20 ist auf dem Grundkörper 10 angeordnet. Vorzugsweise ist das Sensormaterial 20 auf der Vorderseite des Grundkörpers 10 in mindestens einem Bereich der Grundkörpermembran 11 angeordnet.

Vorzugsweise ist das Sensormaterial 20 bereichsweise auf der vorderen Oberfläche F11 der Grundkörpermembran 11 angeordnet. Das Sensormaterial 20 bildet eine sich in der Horizontalebene XY erstreckende Schicht. In der Horizontalebene XY weist das Sensormaterial 20 eine Grundfläche D20 auf. Die Grundfläche D20 ist grösser/gleich dem Durchmesser D11 der Grundkörpermembran 11. Entlang der Vertikalachse Z weist das Sensormaterial 20 eine konstante Dicke T20 auf. Die Dicke T20 ist kleiner/gleich 10 $\mu$m, vorzugsweise ist die Dicke T20 kleiner/gleich 5 $\mu$m, vorzugsweise ist die Dicke T20 kleiner/gleich 1 $\mu$m.

Bei der piezoelektrischen Sensorvorrichtung des Typs 603C liegt das Sensormaterial in Form von drei Scheiben von jeweils 0.2 mm Dicke und 3.5 mm Durchmesser vor. Die Scheiben sind in Axialrichtung gesehen, durch eine metallische Bodenplatte von 0.6 mm Dicke und 3.5 mm Durchmesser von der Membran beabstandet angeordnet. Im weiteren Unterschied zur piezoelektrischen Sensorvorrichtung des Typs 603 ist das Sensormaterial 20 erfindungsgemäss als dünne Schicht auf der Grundkörpermembran 11 angeordnet. Die Dicke T20 der dünnen Schicht ist kleiner/gleich 10 $\mu$m. Somit liegen keine Scheiben mit Sensormaterial vor, und auch die metallische Bodenplatte fällt weg, wodurch das Gewicht der erfindungsgemässen Sensorvorrichtung 1 sinkt. Und da die Eigenfrequenz f1 umgekehrt proportional zum Gewicht der Sensorvorrichtung 1 ist, erhöht sich durch das Fehlen der Scheiben mit Sensormaterial und der metallischen Bodenplatte die Eigenfrequenz f1 der Sensorvorrichtung 1.

Unter der Wirkung des zu messenden Druckes P erzeugt das Sensormaterial 20 als Messwert piezoelektrische Ladung Q20+, Q20-. Der Druck P wirkt entlang der Vertikalachse Z einseitig auf die vordere Oberfläche F11 der Grundkörpermembran 11 und lenkt die Grundkörpermembran 11 aus. In Fig. 2 ist der Druck P schematisch als Pfeil dargestellt. Durch die Auslenkung der Grundkörpermembran 11 erzeugt das piezoelektrische Material 20 piezoelektrische Ladung Q20+, Q20-. Die Menge der erzeugten piezoelektrischen Ladung Q20+, Q20- ist proportional zur Grösse des gemessenen Druckes P. Die dauerhafte Einsatztemperatur des Sensormaterials 20 liegt im Bereich von -40 °C bis +500 °C.

Die piezoelektrische Ladung Q20+, Q20- wird auf mehreren Oberflächen des Sensormaterials 20 erzeugt, welche Oberflächen parallel zur Horizontalebene XY verlaufen. Die piezoelektrische Ladung Q20+, Q20- umfasst erste piezoelektrische Ladung Q20+ und zweite piezoelektrische Ladung Q20-. Im Querschnitt der Fig. 2 wird erste piezoelektrische Ladung Q20+ auf einer von der Grundkörpermembran 11 abgewandten Oberfläche des Sensormaterials 20 erzeugt und zweite piezoelektrische Ladung Q20- wird auf einer der Grundkörpermembran 11 zugewandten Oberfläche des Sensormaterials 20 erzeugt. Gemäss der nachfolgenden Beschreibung wird die erste piezoelektrische Ladung Q20+ vorzugsweise in ein Drucksignal PS gewandelt, während die zweite piezoelektrische Ladung Q20- vorzugsweise Verwendung als Massepotentialsignal MS findet.

Der Empfindlichkeit $\sigma$ der Sensorvorrichtung 1 kommt eine grosse Bedeutung zu. Die Empfindlichkeit $\sigma$ ist das Verhältnis von Messwert zu Eingangsgrösse des zu messenden Druckes P. Die Empfindlichkeit $\sigma$ fällt kubisch mit dem Anstieg der Dicke T11 der Grundkörpermembran 11. Und sie fällt quadratisch mit der Abnahme des Durchmessers D11 der Grundkörpermembran 11.

Somit nimmt die Empfindlichkeit σ der Sensorvorrichtung 1 mit dem Anstieg des Verhältnisses von Dicke T11 zu Durchmesser D11 der Grundkörpermembran 11 ab.

- Für eine Dicke T11 der Grundkörpermembran 11 gleich 5 μm und einen Durchmesser D11 der Grundkörpermembran 11 gleich 300 μm und einem daraus resultierenden Verhältnis von Dicke T11 zu Durchmesser D11 der Grundkörpermembran 11 gleich 1.7 $10^{-2}$ folgt für AIN als Sensormaterial 20 eine Empfindlichkeit σ der Sensorrichtung 1 von rund 5 pC/bar.

- Für eine Dicke T11 der Grundkörpermembran 11 gleich 5 μm und einen Durchmesser D11 der Grundkörpermembran 11 gleich 200 μm und einem daraus resultierenden Verhältnis von Dicke T11 zu Durchmesser D11 der Grundkörpermembran 11 gleich 2.5 $10^{-2}$ folgt für AIN als Sensormaterial 20 eine Empfindlichkeit σ der Sensorrichtung 1 von rund 0.5 pC/bar.

- Für eine Dicke T11 der Grundkörpermembran 11 gleich 5 μm und einen Durchmesser D11 der Grundkörpermembran 11 gleich 100 μm und einem daraus resultierenden Verhältnis von Dicke T11 zu Durchmesser D11 der Grundkörpermembran 11 gleich 5.0 $10^{-2}$ folgt für AIN als Sensormaterial 20 eine Empfindlichkeit σ der Sensorrichtung 1 von rund 0.05 pC/bar.

DER DRUCKSENSOR 1P

Die Sensorvorrichtung 1 weist mehrere Sensorelektroden 21, 23 auf. Die Sensorelektroden 21, 23 haben die Funktion, die piezoelektrische Ladung Q20+, Q20- von den Oberflächen des Sensormaterials 20 abzugreifen.

Die Sensorelektroden 21, 23 sind im Bereich der Oberflächen des Sensormaterials 20 angeordnet, wo piezoelektrische Ladung Q20+, Q20- erzeugt wird. Die Sensorelektroden 21, 23 umfassen eine erste Sensorelektrode 21 und eine zweite Sensorelektrode 23. Die Sensorelektroden 21, 23 bestehen aus elektrisch leitfähigem Material wie Silber (Ag), Gold (Au), Platin (Pt), usw.

Im Querschnitt der Fig. 2 ist die erste Sensorelektrode 21 auf der von der Grundkörpermembran 11 abgewandten Oberfläche des Sensormaterials 20 angeordnet und greift erste piezoelektrische Ladung Q20+ ab. Die zweite Sensorelektrode 23 ist auf der der Grundkörpermembran 11 zugewandten Oberfläche des Sensormaterials 20 angeordnet und greift zweite piezoelektrische Ladung Q20- ab. Jede der beiden Sensorelektroden 21, 23 bildet eine sich parallel zur Horizontalebene XY erstreckende Schicht. Parallel zur Horizontalebene XY weist die erste Sensorelektrode 21 eine erste Sensorgrundfläche D21 und die zweite Sensorelektrode 23 weist eine zweite Sensorgrundfläche D23 auf. Entlang der Vertikalachse Z weist jede der beiden Sensorelektroden 21, 23 eine konstante Dicke von kleiner/gleich 200 nm auf.

Im Vergleich zur piezoelektrischen Sensorvorrichtung des Typs 603C, deren Membran einem Durchmesser von 5.5 mm aufweist, ist die erfindungsgemässe Grundkörpermembran 11 um rund eine Grössenordnung kleiner. Die Grundkörpermembran 11 ist miniaturisiert. Auf der Oberfläche der Membran des Typs 603C haben mehr als hundert erfindungsgemässe Grundkörpermembrane 11 Platz. Die Grundkörpermembran 11, das auf ihr angeordnete Sensormaterial 20 und die auf den Oberflächen des Sensormaterials 20 angeordneten Sensorelektroden 21, 23 bilden einen miniaturisierten Drucksensor 1P, welcher nicht nur für den zu messenden Druck P piezoelektrische Ladung Q20+, Q20- erzeugt, sondern der auch Sensorelektroden 21, 23 aufweist, um diese piezoelektrische Ladung Q20+, Q20- von den Oberflächen des Sensormaterials 20 abzugreifen.

Die Profilsteifigkeit der Grundkörpermembran 11 ist über ihren Durchmesser D11 hinweg nicht konstant. In einem mittleren Bereich der Grundkörpermembran 11 entlang der Vertikalrichtung Z ist die Profilsteifigkeit konstant, doch in einem Randbereich im Übergang zur Stoppschicht 15 und zur Tragschicht 13 nimmt die Profilsteifigkeit zu. Mit der Zunahme der Profilsteifigkeit im Randbereich der Grundkörpermembran 11 nimmt dort die Empfindlichkeit σ der Sensorvorrichtung 1 und somit auch die Erzeugung von piezoelektrischer Ladung Q20+, Q20- ab. Diese Abnahme der Empfindlichkeit σ der Sensorvorrichtung 1 im Randbereich der Grundkörpermembran 11 verfälscht die Messung des Druckes P. Zur Vermeidung der Abnahme der Empfindlichkeit σ der Sensorvorrichtung 1 im Randbereich der Grundkörpermembran 11, wird dort vorzugsweise überhaupt keine erste piezoelektrische Ladung Q20+ abgegriffen, welche erste piezoelektrische Ladung Q20+ vorzugsweise als Drucksignal PS verwendet wird. Aus diesem Grund ist der Durchmesser der ersten Sensorgrundfläche D21, auf welcher die erste piezoelektrische Ladung Q20+ abgegriffen wird, kleiner als der Durchmesser D11 der Grundkörpermembran 11. Vorzugsweise ist die erste Sensorgrundfläche D21 kleiner/gleich 80 %, vorzugsweise kleiner/gleich 60 % des Durchmessers D11 der Grundkörpermembran 11.

Die zweite Sensorgrundfläche D23 hingegen, auf welcher die zweite piezoelektrische Ladung Q20- abgegriffen wird, welche zweite piezoelektrische Ladung Q20- vorzugsweise als Massepotentialsignal MS verwendet wird, ist vorzugsweise grösser/gleich dem Durchmesser D11 der Grundkörpermembran 11.

Die Sensorvorrichtung 1 weist mehrere Sensorkontaktstellen 22, 24 auf. Die Sensorkontaktstellen 22, 24 haben die Funktion, eine elektrische Kontaktierung der Sensorelektroden 21, 23 mit der Ableitung 5 bereitzustellen.

Die Sensorkontaktstellen 22, 24 bestehen aus elektrisch leitfähigem Material wie Ag, Au, Pt, usw.

Die Sensorkontaktstellen 22, 24 umfassen eine erste Sensorkontaktstelle 22 und eine zweite Sensorkontaktstelle 24. Die erste Sensorkontaktstelle 22 ist auf der ersten Sensorelektrode 21 angeordnet und kontaktiert die erste Sensorelektrode 21 elektrisch. Die zweite Sensorkontaktstelle 24 ist auf der zweiten Sensorelektrode 23 angeordnet und kontaktiert die zweite Sensorelektrode 23 elektrisch. Jede der beiden Sensorkontaktstellen 22, 24 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

Die Grundkörpermembran 11, das auf der vorderen Oberfläche F11 der Grundkörpermembran 11 angeordnete Sensormaterial 20 und die auf den Oberflächen des Sensormaterials 20 angeordneten Sensorelektroden 21, 23 bilden den Drucksensor 1P der Ausführungsformen der Sensorvorrichtung 1 gemäss der Fig. 1 bis 3. Die piezoelektrische Ladung Q20+, Q20-ist der Messwert des Drucksensors 1P. Die dauerhafte Einsatztemperatur des Drucksensors 1P liegt im Bereich von -40 °C bis +500 °C.

DIE GRUPPE VON DRUCKSENSOREN 1P

Gemäss der zweiten Ausführungsform der Sensorvorrichtung 1 weist der Grundkörper 10 eine Mehrzahl von Grundkörpermembrane 11 auf.

Vorzugsweise ist die Mehrzahl von Grundkörpermembrane 11 auf der in der Horizontalebene XY liegenden Vorderseite des Grundkörpers 10 angeordnet. Der zu messende Druck P wirkt entlang der Vertikalrichtung Z auf die vorderen Oberflächen F11 der Mehrzahl von Grundkörpermembrane 11 und lenkt die Mehrzahl von Grundkörpermembrane 11 aus. Auf jeder der Mehrzahl von Grundkörpermembrane 11 ist Sensormaterial 20 in mindestens einem Bereich auf der vorderen Oberfläche F11 der Grundkörpermembran 11 angeordnet. Durch die Auslenkung der Grundkörpermembran 11 erzeugt das Sensormaterial 20 piezoelektrische Ladung Q20+, Q20-. Auf jeder der Mehrzahl von Grundkörpermembrane 11 ist die erste Sensorelektrode 21 auf der von der Grundkörpermembran 11 abgewandten Oberfläche des Sensormaterials 20 angeordnet und greift erste piezoelektrische Ladung Q20+ ab. Die zweite Sensorelektrode 23 ist auf der der Grundkörpermembran 11 zugewandten Oberfläche des Sensormaterials 20 angeordnet und greift zweite piezoelektrische Ladung Q20-ab.

Gemäss der zweiten Ausführungsform weist die Sensorvorrichtung 1 mehrere Sensorgruppenleiter 25, 27 auf. Die Sensorgruppenleiter 25, 27 haben die Funktion der Sammlung der piezoelektrischen Ladung Q20+, Q20-.

Die Sensorgruppenleiter 25, 27 bestehen aus elektrisch leitfähigem Material wie Ag, Au, Pt, usw.

Die Sensorgruppenleiter 25, 27 sind im Bereich der beiden Oberflächen des Sensormaterials 20 angeordnet. Die Sensorgruppenleiter 25, 27 umfassen einen ersten Sensorgruppenleiter 25 und einen zweiten Sensorgruppenleiter 27. Der erste Sensorgruppenleiter 25 kontaktiert elektrisch die ersten Sensorelektroden 21 und schaltet diese elektrisch in Reihe. Der zweite Sensorgruppenleiter 27 kontaktiert elektrisch die zweiten Sensorelektroden 23 und schaltet diese elektrisch in Reihe.

Die Mehrzahl der Grundkörpermembrane 11 auf welchen auf vorderen Oberflächen F11 Sensormaterial 20 angeordnet ist, das Sensormaterial 20, welches auf der Mehrzahl der Grundkörpermembrane 11 angeordnet ist, und die auf den Oberflächen dieses Sensormaterials 20 angeordneten Sensorelektroden 21, 23 und Sensorgruppenleiter 25, 27 bilden eine Gruppe von Drucksensoren 1P.

Vorteilhafterweise ist im Grundkörper 10 eine Mehrzahl von grösser/gleich zwei Grundkörpermembrane 11, vorzugsweise eine Mehrzahl von grösser/gleich sechzehn Grundkörpermembrane 11, vorzugsweise eine Mehrzahl von grösser/gleich 128 Grundkörpermembrane 11 ausgeformt.

Die Erhöhung der Eigenfrequenz f1 der erfindungsgemässen Sensorvorrichtung 1 wird durch eine Abnahme des Verhältnisses von Dicke T11 zu Durchmesser D11 der Grundkörpermembran 11 erreicht, dafür nimmt aber auch die Empfindlichkeit σ der erfindungsgemässen Sensorvorrichtung 1 ab. Die Empfindlichkeit σ verändert sich quadratisch mit dem Durchmesser D11 der Grundkörpermembran 11. Bei konstant gehaltener Dicke T11 resultiert aus einer Halbierung des Durchmessers D11 der Grundkörpermembran 11 eine Viertelung der Menge der erzeugten piezoelektrischen Ladung Q20+, Q20-. Durch die Anordnung einer Mehrzahl von Grundkörpermembrane 11 im Grundkörper 10, wobei auf jeder vorderen Oberflächen F11 der Mehrzahl von Grundkörpermembrane 11 Sensormaterial 20 angeordnet ist, und die Reihenschaltung der Sensorelektroden 21, 23, welche die piezoelektrische Ladung Q20+, Q20- des Sensormaterials 20 abgreifen, lässt sich die Abnahme der Empfindlichkeit σ erfindungsgemässen Sensorvorrichtung 1 ausgleichen und sogar erhöhen.

Gemäss der zweiten Ausführungsform weist die Sensorvorrichtung 1 weist mehrere Sensorgruppenkontaktstellen 26, 28 auf. Die Sensorgruppenkontaktstellen 26, 28 haben die Funktion der Bereitstellung einer elektrischen Kontaktierung mit der Ableitung 5.

Die Sensorgruppenkontaktstellen 26, 28 bestehen aus elektrisch leitfähigem Material wie Ag, Au, Pt, usw.

Die Sensorgruppenkontaktstellen 26, 28 umfassen eine erste Sensorgruppenkontaktstelle 26 und eine zweite Sensorgruppenkontaktstelle 28. Die erste Sensorgruppenkontaktstelle 26 ist auf dem ersten Sensorgruppenleiter 25 angeordnet und kontaktiert diesen elektrisch. Die zweite Sensorgruppenkontaktstelle 28 ist auf dem zweiten Sensorgruppenleiter 27 angeordnet und kontaktiert diesen elektrisch. Jede der beiden Sensorgruppenkontaktstellen 26, 28 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

DIE ABLEITUNG 5

Die Ableitung 5 hat die Funktion, die piezoelektrische Ladung Q20+, Q20- abzuleiten.

Die Ableitung 5 weist mehrere Ladungsableiter 51, 52 aus elektrisch leitfähigem Material wie Kupfer (Cu), Ag, Au, usw. auf. Die Ladungsableiter 51, 52 sind Drähte von typischerweise 15 bis 200 $\mu$m Durchmesser.

Die Ladungsableiter 51, 52 umfassen einen ersten Ladungsableiter 51 und einen zweiten Ladungsableiter 52.

Gemäss dem schematischen Schaltplan der Fig. 4 erfolgt auf der ersten Sensorkontaktstelle 22 eine elektrische Kontaktierung mit dem ersten Ladungsableiter 51 und auf der zweiten Sensorkontaktstelle 24 erfolgt eine elektrische Kontaktierung mit dem zweiten Ladungsableiter 52. Über diese Ladungsableiter 51, 52 wird die piezoelektrische Ladung Q20+, Q20- von den Sensorkontaktstellen 22, 24 abgeleitet.

Gemäss dem schematischen Schaltplan der Fig. 5 erfolgt auf der ersten Sensorgruppenkontaktstelle 26 eine elektrische Kontaktierung mit dem ersten Ladungsableiter 51 und auf der zweiten Sensorgruppenkontaktstelle 28 erfolgt eine elektrische Kontaktierung mit dem zweiten Ladungsableiter 52. Über diese Ladungsableiter 51, 52 wird die piezoelektrische Ladung Q20+, Q20- von den beiden Sensorgruppenkontaktstellen 26, 28 abgeleitet.

Bei einer Messfrequenz f* von deutlich über 100 kHz ist eine Wellenimpedanz Z5 der Ableitung 5 in Betracht zu ziehen. Denn die piezoelektrische Ladung Q20+, Q20- der Ladungsableiter 51, 52 erzeugt ein Magnetfeld und somit eine Induktivität. Und die Ladungsableiter 51, 52 bilden zueinander eine Kapazität. Die Wellenimpedanz Z5 ist abhängig sowohl von der Induktivität als auch der Kapazität der Ableitung 5. Die Wellenimpedanz Z5 führt zu elektromagnetischen Wellen, welche an den Enden der Ableitung 5 reflektiert werden. Die Reflexionen der elektromagnetischen Wellen können die Messung des Druckes P verfälschen. Zur Vermeidung solcher Reflexionen wird mindestens ein Ende der Ableitung 5 mit einem elektrischen Widerstand elektrisch abgeschlossen. Der elektrische Widerstand absorbiert einlaufende elektromagnetische Wellen. Der elektrische Widerstand entspricht der Wellenimpedanz Z5 der Ableitung 5. Je nach Industriestandard beträgt die Wellenimpedanz Z5 für eine Ableitung 5 in der Ausführungsform einer Koaxialleitung bei 50 $\Omega$ oder 75 $\Omega$ und für eine Ableitung 5 in der Ausführungsform einer Zweidrahtleitung im Bereich von 100 $\Omega$ bis 300 $\Omega$.

DIE WANDLEREINHEIT 6

Die Wandlereinheit 6 hat die Funktion, abgeleitete piezoelektrische Ladung Q20+, Q20- in mindestens ein Messsignal PS, MS elektrisch zu wandeln.

Das Messsignal PS, MS umfasst ein Drucksignal PS und ein Massepotentialsignal MS. Das Drucksignal PS entspricht der ersten piezoelektrischen Ladung Q20+. Das Massepotentialsignal MS entspricht der zweiten piezoelektrischen Ladung Q20-.

Gemäss den schematischen Schaltplänen der Fig. 4 und 5 weist die Wandlereinheit 6 mindestens einen Operationsverstärker 61, mindestens eine Rückkopplungskapazität 62, mindestens einen ersten Ladungseingangskontakt 63, mindestens einen zweiten Ladungseingangskontakt 65, mindestens einen Signalausgangskontakt 66 und mindestens einen Massepotentialausgangskontakt 67 auf.

Der Operationsverstärker 61 weist einen invertierenden Eingang i- einen nichtinvertierenden Eingang i+ und einen Signalausgang o auf. Der invertierende Eingang i- weist eine hohe elektrische Isolation mit einem kleinen Leckstrom von kleiner/gleich $10^{-14}$ A (Ampere) auf. Der invertierende Eingang i- der Wandlereinheit 6 weist eine Eingangsimpedanz Z61 auf, welche nahe bei 0 $\Omega$ liegt. Der nichtinvertierende Eingang i+ liegt auf einem Massepotential 64 der Sensorvorrichtung 1. Das Massepotential 64 ist ein elektrisches Referenzpotenzial wie 0 V. Das Massepotential 64 kann das elektrische Potential des elektrisch leitfähigen Erdreichs am Ort der Sensorvorrichtung 1 sein.

Die Ladungseingangskontakte 63, 65 haben die Funktion, eine elektrische Kontaktierung der Wandlereinheit 6 mit der Ableitung 5 bereitzustellen. Die Ladungseingangskontakte 63, 65 bestehen aus elektrisch leitfähigem Material wie Cu, Ag, Au, usw.

Der erste Ladungsableiter 51 bildet ein Ende der Ableitung 5 dem invertierenden Eingang i- des Operationsverstärkers 61. Der erste Ladungsableiter 51 ist über den ersten Ladungseingangskontakt 63 mit dem invertierenden Eingang i- des Operationsverstärkers 61 elektrisch kontaktiert. Somit liegen die zweite piezoelektrische Ladung Q20+ des Drucksensors 1P sowie der Gruppe von Drucksensoren 1P am invertierenden Eingang i- des Operationsverstärkers 61 an. Die zweite piezoelektrische Ladung Q20+ verursachen am invertierenden Eingang i- einen elektrischen Strom.

Der zweite Ladungsableiter 52 ist über den zweiten Ladungseingangskontakt 65 mit dem Massepotenzial 64 elektrisch kontaktiert. Somit liegen die erste piezoelektrische Ladung Q20- des Drucksensors 1P sowie der Gruppe von Drucksensoren 1P auf dem Massepotential 64.

Die Funktion des Operationsverstärkers 61 ist es, piezoelektrische Ladung Q20+ am invertierenden Eingang i- zu verstärken.

Der Operationsverstärker 61 versucht die Spannungsdifferenz zwischen dem invertierenden Eingang i- und dem nicht invertierenden Eingang i+ auf null anzupassen. Dazu fliesst die zu verstärkende piezoelektrische Ladung Q20+ vom invertierenden Eingang i- als elektrischer Strom in den Operationsverstärker 61 und erzeugt am Signalausgang o eine elektrische Ausgangsspannung.

Der Operationsverstärker 61 weist eine Arbeitsfrequenz f61 auf. Die Arbeitsfrequenz f61 ist die höchste Frequenz, mit der der Operationsverstärker 61 piezoelektrische Ladung Q20+ verstärken kann. Vorzugsweise ist die Arbeitsfrequenz f61 grösser/gleich 50 MHz, vorzugsweise grösser/gleich 500 MHz.

Die Rückkopplungskapazität 62 ist parallel zum invertierenden Eingang i- und zum Signalausgang o des Operationsverstärkers 61 geschaltet.

Die Funktion der Rückkopplungskapazität 62 ist es, einen Verstärkungsfaktor der Wandlereinheit 6 einzustellen. Die Rückkopplungskapazität 62 ist zwischen den invertierenden Eingang i- und den Signalausgang o des Operationsverstärkers 61 geschaltet. Über die Rückkopplungskapazität 62 fliesst die am Signalausgang o anliegende elektrische Ausgangsspannung als elektrischer Strom zurück zum invertierenden Eingang i-. Die Menge des zurückfliessenden elektrischen Stroms erfolgt in Abhängigkeit der Grösse C62 der Rückkopplungskapazität 62. Je grösser die Rückkopplungskapazität 62 ist, desto mehr elektrischer Strom fliesst zum invertierenden Eingang i- zurück, welcher elektrische Strom dann zusätzlich zur zu verstärkenden piezoelektrische Ladung Q20+ in den Operationsverstärker 61 fliesst. Vorzugsweise liegt die Grösse C62 der Rückkopplungskapazität 62 im Bereich von 10 pF bis 1000 pF.

Die Eingangsimpedanz Z61 am invertierenden Eingang i- ist umgekehrt proportional zum Produkt aus der Arbeitsfrequenz f61 des Operationsverstärkers 61 mit der Grösse C62 der Rückkopplungskapazität 62:

$$Z61 \propto \frac{1}{f61*C62}$$

Zur Vermeidung von Reflexionen der elektromagnetischen Wellen in der Ableitung 5 und am invertierenden Eingang i- ist die Wellenimpedanz Z5 der Ableitung 5 mit der Eingangsimpedanz Z61 am invertierenden Eingang i- abgeglichen. Dazu wird eine Abgleichimpedanz Z6 elektrisch zwischen ein Ende der Ableitung 5 zum invertierenden Eingang i- und den invertierenden Eingang i- geschaltet. Für den Abgleich von der Wellenimpedanz Z5 der Ableitung 5 gilt:

$$Z5 = Z61 + Z6$$

Die Abgleichimpedanz Z6 ist in der Grössenordnung der Wellenimpedanz Z5 der Ableitung 5. Vorzugsweise ist die Abgleichimpedanz Z6 kleiner/gleich der Wellenimpedanz Z5 der Ableitung 5. Für die Wellenimpedanz Z5 einer Ableitung 5 in der Ausführungsform einer Koaxialleitung von 50 Ω oder 75 Ω ist die Abgleichimpedanz Z6 kleiner/gleich dieser Wellenimpedanz Z5 einer Koaxialleitung von 50 Ω oder 75 Ω. Für die Wellenimpedanz Z5 einer Ableitung 5 in der Ausführungsform einer Zweidrahtleitung im Bereich von 100 Ω bis 300 Ω ist die Abgleichimpedanz Z6 kleiner/gleich dieser Wellenimpedanz Z5 dieser Zweidrahtleitung im Bereich von 100 Ω bis 300 Ω. Vorzugsweise ist die Abgleichimpedanz Z6 kleiner/gleich 300 Ω, vorzugsweise kleiner/gleich 75 Ω, vorzugsweise kleiner/gleich 50 Ω.

Um ein Zahlenbeispiel zu nennen. Für einen Proportionalitätsfaktor zwischen der Eingangsimpedanz Z61 am invertierenden Eingang i- und dem Produkt aus der Arbeitsfrequenz f61 des Operationsverstärkers 61 mit der Grösse C62 der Rückkopplungskapazität 62 von $2\pi$ sowie einer Arbeitsfrequenz f61 des Operationsverstärkers 61 von 500 MHz und einer Grösse C62 der Rückkopplungskapazität 62 von 100 pF eine Eingangsimpedanz Z61 am invertierenden Eingang i- von 3.2 Ω. Zum Abgleich mit einer Wellenimpedanz Z5 der Ableitung 5 in der Ausführungsform einer Koaxialleitung von 50 Ω beträgt die Abgleichimpedanz Z6 dann 46.8 Ω.

Das Drucksignal PS ist die am Signalausgang o des Operationsverstärkers 61 anliegende elektrische Ausgangsspannung. Das Drucksignal PS entspricht der Menge der ersten piezoelektrischen Ladung Q20+. Jede erste piezoelektrische Ladung Q20+ verstärkt die Wandlereinheit 6 in ein Drucksignal PS.

Der Signalausgangskontakt 66 und der Massepotentialausgangskontakt 67 haben die Funktion, eine elektrische Kontaktierung der Wandlereinheit 6 mit der Auswerteeinheit 7 bereitzustellen. Der Signalausgangskontakt 66 und der Massepotentialausgangskontakt 67 bestehen aus elektrisch leitfähigem Material wie Cu, Ag, Au, usw.

Der Signalausgang o des Operationsverstärkers 61 kontaktiert elektrisch den Signalausgangskontakt 66. Das Drucksignal PS liegt am Signalausgangskontakt 66 an. Der Massepotentialausgangskontakt 67 ist mit dem Massepotenzial 64 elektrisch kontaktiert. Das Massepotentialsignal MS liegt am Massepotentialausgangskontakt 67 an.

DIE AUSWERTEEINHEIT 7

Die Auswerteeinheit 7 hat die Funktion, die Sensorsignale PS, MS auszuwerten.

Dazu weist die Auswerteeinheit 7 mindestens einen Signalleiter 71, mindestens einen Massepotentialleiter 72, mindestens eine Schnittstelle 73, mindestens eine Recheneinheit 74, mindestens eine Eingabeeinheit 75 und mindestens eine Ausgabeeinheit 76 auf.

Der Signalleiter 71 und der Massepotentialleiter 72 sind aus elektrisch leitfähigem Material wie Cu, Ag, Au, usw.

Am ersten Signalausgangskontakt 66 erfolgt eine elektrische Kontaktierung mit dem Signalleiter 71 und am ersten Massepotentialausgangskontakt 72 erfolgt eine elektrische Kontaktierung mit dem Masspotentialleiter 72. Über den Signalleiter 71 wird das Drucksignal PS zur Schnittstelle 73 abgeleitet. Über den Massepotentialleiter 72 wird das Massepotentialsignal MS zur Schnittstelle 73 abgeleitet.

Die Schnittstelle 73 hat die Funktion, die Messignale PS, MS in Messdatenelemente PD, MD zu digitalisieren.

Dazu weist die Schnittstelle 73 mindestens ein Wandlerelement wie einen Analog/Digital-Wandler, usw. auf. Das Wandlerelement ist eingerichtet, die Messignale PS, MS in Messdatenelemente PD, MD zu digitalisieren. Jedes Messdatenelement PD, MD gibt einen Messdatenbetrag pv, mv für einen Messwert an. Jedes Messdatenelement PD, MD ist eine binäre Zahlenfolge mit einer Auflösung von 12 Bit, 16 Bit, usw.

Die Schnittstelle 73 weist auch mindestens einen Zeitgeber wie eine Uhr, usw. auf. Der Zeitgeber ist eingerichtet, jedes Messdatenelement PD, MD mit einem Zeitpunkt pt, mt zu versehen. Jeder Zeitpunkt pt, mt ist eine binäre Zahlenfolge mit einer Auflösung von 12 Bit, 16 Bit, usw. Der Zeitpunkt pt, mt, mit dem ein Messdatenelement PD, MD versehen ist, wird nachfolgend auch als der mit dem Messdatenelement PD, MD assoziierte Zeitpunkt pt, mt bezeichnet. Zum Zeitpunkt pt, mt hat die Schnittstelle 73 ein Sensorsignal PS, MS in das Messdatenelement PD, MD digitalisiert. Der Zeitpunkt pt, mt weist eine zeitliche Auflösung auf, welche gemäss dem Nyquist-Shannon-Abtasttheorem gleich dem Kehrwert der doppelten Messfrequenz f* ist. Für eine Messfrequenz f* von maximal 1/3 der Eigenfrequenz f1 von grösser/gleich 1 MHz weist der Zeitpunkt pt, mt eine zeitliche Auflösung von grösser/gleich $3/2 \cdot 10^{-6}$ sec auf.

Die Messdatenelemente PD, MD umfassen mindestens ein Druckdatenelement PD mit einem Druckbetrag pv und die Zeitpunkte pt, mt umfassen mindestens einen Druckzeitpunkt pt, welcher mit dem Druckdatenelement PD assoziiert ist. Die Schnittstelle 73 digitalisiert jedes Drucksignal PS in ein Druckdatenelement PD mit einem Druckbetrag pv und versieht das Druckdatenelement PD mit einem assoziierten Druckzeitpunkt pt.

Die Messdatenelemente PD, MD gemäss den schematischen Schaltplänen der Fig. 4 und 5 umfassen auch mindestens ein Massepotentialdatenelement MD mit einem Massepotentialbetrag mv und die Zeitpunkte pt, mt umfassen mindestens einen Massepotentialzeitpunkt mt, welcher mit dem Massepotentialdatenelement MD assoziiert ist.

Die Recheneinheit 74 weist mindestens einen Datenspeicher und mindestens einen Datenprozessor auf.

Die Recheneinheit 74 weist mindestens ein Auswerteprogramm AP auf, welches im Datenspeicher gespeichert und in den Datenprozessor ladbar ist. Das in den Datenprozessor geladene Auswerteprogramm AP ist eingerichtet, die Messdatenelemente PD, MD mit den Messdatenbeträgen pv, mv und die Zeitpunkte pt, mt auszuwerten.

Die Recheneinheit 74 ist über die Eingabeeinheit 75 bedienbar. Das Verb "bedienen" hat die Bedeutung, dass eine menschliche Person über die Eingabeeinheit 75 Befehle eingeben kann, welche Befehle von der Recheneinheit 75 ausgeführt werden. Die Eingabeeinheit 75 kann eine Tastatur oder ein berührungsempfindlicher Bildschirm zur Eingabe von Befehlen sein. Über die Eingabeeinheit 75 lassen sich Befehle als Zeichenfolge eingeben und das in den Datenprozessor geladene Auswerteprogramm AP ist eingerichtet, für eingegebene Befehle Steuerdaten zu erzeugen. So kann der eingegebene Befehl lauten, die Sensorvorrichtung 1 einzuschalten oder auszuschalten und das in den Datenprozessor geladene Auswerteprogramm AP ist eingerichtet, für den Befehl Steuerdaten zu erzeugen, welche Steuerdaten die Sensorvorrichtung 1 einzuschalten oder auszuschalten.

Auch ist das in den Datenprozessor geladene Auswerteprogramm AP eingerichtet die Messdatenelemente PD, MD und die Datumselemente t zur Auswertung graphisch darzustellen. Die Ausgabeeinheit 76 kann ein Bildschirm sein, auf dem die Messdatenelemente PD, MD für die menschliche Person graphisch dargestellt sind.

Bei Kenntnis der vorliegenden Erfindung kann der Fachmann vielfältige Variationen der gezeigten Ausführungsformen realisieren. So lassen sind der Drucksensor 1P, die Ableitung 5 und die Wandlereinheit 6 in einem Gehäuse am Ort der Messung des Druckes P realisieren.

## Bezugszeichenliste

| | |
|---|---|
| 1 | Sensorvorrichtung |
| 1P | Drucksensor |
| 5 | Ableitung |
| 6 | Wandlereinheit |
| 7 | Auswerteeinheit |
| 10 | Grundkörper |
| 11 | Grundkörpermembran |
| D11 | Durchmesser der Grundkörpermembran |
| F11 | vordere Oberfläche der Grundkörpermembran |
| F12 | hintere Oberfläche der Grundkörpermembran |
| T11 | Dicke der Grundkörpermembran |
| 12 | Grundkörperöffnung |
| 13 | Tragschicht |
| 14 | Grenzschicht |
| 15 | Stoppschicht |
| 20 | Sensormaterial |
| D20 | Grundfläche des Sensormaterials |
| T20 | Dicke des Sensormaterials |
| 21 | erste Sensorelektrode |
| D21 | Grundfläche der ersten Sensorelektrode |
| 22 | erste Sensorkontaktstelle |
| 23 | zweite Sensorelektrode |
| D23 | Grundfläche der zweiten Sensorelektrode |

| 24 | zweite Sensorkontaktstelle |
|---|---|
| 25 | erster Sensorgruppenleiter |
| 26 | erste Sensorgruppenkontaktstelle |
| 27 | zweiter Sensorgruppenleiter |
| 28 | zweite Sensorgruppenkontaktstelle |
| 51 | erster Ladungsableiter |
| 52 | zweiter Ladungsableiter |
| 61 | Operationsverstärker |
| - | invertierender Eingang |
| + | nichtinvertierender Eingang |
| o | Signalausgang |
| 62 | Rückkopplungskapazität |
| C62 | Grösse der Rückkopplungskapazität |
| 63 | erster Ladungseingangskontakt |
| 64 | Massepotential |
| 65 | zweiter Ladungseingangskontakt |
| 66 | Signalausgangskontakt |
| 67 | Massepotentialausgangskontakt |
| 71 | Signalleiter |
| 72 | Massepotentialleiter |
| 73 | Schnittstelle |
| 74 | Recheneinheit |
| 75 | Eingabeeinheit |
| 76 | Ausgabeeinheit |
| AP | Auswerteprogramm |
| A - A | Schnittverlauf |
| f1 | Eigenfrequenz |
| f* | Messfrequenz |
| f61 | Arbeitsfrequenz |
| MD | Massepotentialdatenelement |
| MS | Massepotentialsignal |
| mt | Massepotentialzeitpunkt |
| mv | Massepotentialbetrag |
| P | Druck |
| PD | Druckdatenelement |
| PS | Drucksignal |
| pt | Druckzeitpunkt |
| pv | Druckbetrag |
| Q20+ | erste piezoelektrische Ladung |
| Q20- | zweite piezoelektrische Ladung |
| $\sigma$ | Empfindlichkeit |
| X | Horizontalachse |
| XY | Horizontalebene |
| Y | Schrägachse |
| Z | Vertikalachse |
| Z5 | Wellenimpedanz |
| Z6 | Abgleichimpedanz |
| Z61 | Eingangsimpedanz |

**Patentansprüche**

1. Sensorvorrichtung (1) eingerichtet zur Messung eines Druckes (P); mit mindestens einem Grundkörper (10) und mindestens einem Sensormaterial (20); welcher Grundkörper (10) bereichsweise als Grundkörpermembran (11) ausgeformt ist, welche Grundkörpermembran (11) entlang einer Vertikalachse (Z) eine Dicke (T11) und in einer Horizontalebene (XY) senkrecht zur Vertikalachse (Z) einen Durchmesser (D11) aufweist; welche Grundkörpermembran (11) eingerichtet ist, den zu messenden Druck (P) aufzunehmen und welche Grundkörpermembran (11) unter der Wirkung des Druckes (P) entlang der Vertikalachse (Z) auslenkbar ist; **dadurch gekennzeichnet, dass** das Sensormaterial (20) auf der Grundkörpermembran (11) angeordnet ist, welches Sensormaterial (20) durch die Auslenkung der Grundkörpermembran (11) piezoelektrische Ladung (Q20+, Q20-) erzeugt und eine Menge der erzeugten piezoelektrischen Ladung (Q20+, Q20-) proportional zur Grösse des gemessenen Druckes (P) ist; dass die Dicke (T11) der Grundkörpermembran (11) kleiner/gleich 20 $\mu$m, vorzugsweise kleiner/gleich 10 $\mu$m, vorzugsweise kleiner/gleich 5 $\mu$m ist; dass der Durchmesser (D11) der Grundkörpermembran (11) kleiner/gleich 300 $\mu$m, vorzugsweise kleiner/gleich 200 $\mu$m, vorzugsweise kleiner/gleich 100 $\mu$m ist; und dass ein Verhältnis von Dicke (T11) zu Durchmesser (D11) der Grundkörpermembran (11) so gewählt ist, dass die Sensorvorrichtung (1) eine Eigenfrequenz (f1) von grösser/gleich 1 MHz aufweist.

2. Sensorvorrichtung (1) gemäss Anspruch 1, **dadurch gekennzeichnet, dass** das Verhältnis von Dicke (T11) zu Durchmesser (D11) der Grundkörpermembran (11) im Bereich von $1.7 \cdot 10^{-2}$ bis $5.0 \cdot 10^{-2}$ ist.

3. Sensorvorrichtung (1) gemäss einem der Ansprüche 1 oder 2, **dadurch gekennzeichnet, dass** das das Sensormaterial (20) auf einer vorderen Oberfläche (F11) der Grundkörpermembran (11) angeordnet ist, welche vorderen Oberfläche (F11) einer Richtung in der der Druck (P) wirkt, zugewandt ist.

4. Sensorvorrichtung (1) gemäss einem der Ansprüche 1 bis 3, **dadurch gekennzeichnet, dass** das Sensormaterial (20) entlang der Vertikalachse (Z) eine Dicke (T20) von kleiner/gleich 10 $\mu$m, vorzugsweise kleiner/gleich 5 $\mu$m, vorzugsweise kleiner/gleich 1 $\mu$m aufweist.

5. Sensorvorrichtung (1) gemäss einem der Ansprüche 1 bis 4, **dadurch gekennzeichnet, dass** das der Grundkörper (10) und die Grundkörpermembran (11) aus Silizium bestehen.

6. Sensorvorrichtung (1) gemäss einem der Ansprüche 1 bis 5, **dadurch gekennzeichnet, dass** die piezoelektrische Ladung (Q20+, Q20-) auf mehreren Oberflächen des Sensormaterials (20) erzeugt wird; dass die Sensorvorrichtung (1) mehrere Sensorelektroden (21, 23) aufweist, welche Sensorelektroden (21, 23) auf den Oberflächen des Sensormaterials (20) angeordnet sind und die piezoelektrische Ladung (Q20+, Q20-) abgreifen; und dass die Grundkörpermembran (11), das auf der vorderen Oberfläche (F11) der Grundkörpermembran (11) angeordnete Sensormaterial (20) und die auf den Oberflächen des Sensormaterials (20) angeordneten Sensorelektroden (21, 23) einen Drucksensor (1P) bilden.

7. Sensorvorrichtung (1) gemäss Anspruch 5, **dadurch gekennzeichnet, dass** die piezoelektrische Ladung (Q20+, Q20-) erste piezoelektrische Ladung (Q20+) und zweite piezoelektrische Ladung (Q20-) umfasst; dass die mehreren Sensorelektroden (21, 23) eine erste Sensorelektrode (21) und eine zweite Sensorelektrode (23) umfassen; dass die erste Sensorelektrode (21) eine erste Sensorgrundfläche (D21) und die zweite Sensorelektrode (23) eine zweite Sensorgrundfläche (D23) aufweist; dass die erste Sensorelektrode (21) erste piezoelektrische Ladung (Q20+) abgreift, welche erste piezoelektrische Ladung (Q20+) als Drucksignal (PS) verwendet wird; und dass die erste Sensorgrundfläche (D23) kleiner/gleich 80 % des Durchmessers (D11) der Grundkörpermembran (11), vorzugsweise kleiner/gleich 60 % ist.

8. Sensorvorrichtung (1) gemäss einem der Ansprüche 6 oder 7, **dadurch gekennzeichnet, dass** im Grundkörper (10) bereichsweise eine Mehrzahl von Grundkörpermembrane (11) ausgeformt ist; dass jede der Mehrzahl von Grundkörpermembrane (11) eingerichtet ist, den zu messenden Druck (P) aufzunehmen und dass jede der Mehrzahl von Grundkörpermembrane (11) unter der Wirkung des Druckes (P) auslenkbar ist; dass auf jeder der Mehrzahl von Grundkörpermembrane (11) Sensormaterial (20) auf der Grundkörpermembran (11) angeordnet ist, welches Sensormaterial (20) durch die Auslenkung der Grundkörpermembran (11) piezoelektrische Ladung (Q20+, Q20-) erzeugt.

9. Sensorvorrichtung (1) gemäss Anspruch 8, **dadurch gekennzeichnet, dass** im Grundkörper (10) eine Mehrzahl von grösser/gleich zwei Grundkörpermembrane (11), vorzugsweise eine Mehrzahl von grösser/gleich sechzehn Grundkörpermembrane (11), vorzugsweise eine Mehrzahl von grösser/gleich 128 Grundkörpermembrane (11) ausgeformt ist.

10. Sensorvorrichtung (1) gemäss einem der Ansprüche 8 oder 9, **dadurch gekennzeichnet, dass** die piezoelektrische Ladung (Q20+, Q20-) erste piezoelektrische Ladung (Q20+) und zweite piezoelektrische Ladung (Q20-) umfasst, welche erste piezoelektrische Ladung (Q20+) auf einer von der Grundkörpermembran (11) abgewandten Oberfläche des Sensormaterials (20) erzeugt wird, und welche zweite piezoelektrische Ladung (Q20-) auf einer der Grundkörpermembran (11) zugewandten Oberfläche des Sensormaterials (20) erzeugt wird; dass die mehreren Sensorelektroden (21, 23) eine erste Sensorelektrode (21) und eine zweite Sensorelektrode (23) umfassen, welche erste Sensorelektrode (21) auf der von der Grundkörpermembran (11) abgewandten Oberfläche des Sensormaterials (20) angeordnet ist und erste piezoelektrische Ladung (Q20+) abgreift, welche zweite Sensorelektrode (23) auf der der Grundkörpermembran (11) zugewandten Oberfläche des Sensormaterials (20) angeordnet ist und zweite piezoelektrische Ladung (Q20-) abgreift; und dass die Sensorgruppenleiter (25, 27) einen ersten Sensorgruppenleiter (25) und einen zweiten Sensorgruppenleiter (27) umfassen, über welchen ersten Sensorgruppenleiter (25) die ersten Sensorelektroden (21) elektrisch in Reihe geschaltet sind und über welchen zweiten Sensorgruppenleiter (27) die zweiten Sensorelektroden (23) elektrisch in Reihe geschaltet sind.

11. Sensorvorrichtung (1) gemäss einem der Ansprüche 1 bis 10, **dadurch gekennzeichnet, dass** die Sensorvorrichtung (1) mindestens eine Ableitung (5) aufweist, welche Ableitung (5) mehrere Ladungsableiter (51, 52) aufweist; dass die Ladungsableiter (51, 52) die piezoelektrische Ladung (Q20+, Q20-) ableiten; und dass mindestens ein Ende der Ableitung (5) mit einer Wellenimpedanz (Z5) elektrisch abgeschlossen ist.

12. Sensorvorrichtung (1) gemäss Anspruch 11, **dadurch gekennzeichnet, dass** die Sensorvorrichtung (1) mindestens eine Wandlereinheit (6) aufweist, welche Wandlereinheit (6) einen Operationsverstärker (61) und eine Rückkopplungskapazität (62) aufweist; dass der Operationsverstärker (61) einen invertierenden Eingang (i-), einen nichtinvertierenden Eingang (i+) und einen Signalausgang (o) aufweist; dass die Rückkopplungskapazität (62) zwischen den invertierendem Eingang (i-) und den Signalausgang (o) geschaltet ist; dass die Ableitung (5) die piezoelektrische Ladung (Q20+, Q20-) zur Wandlereinheit (6) ableitet; dass die piezoelektrische Ladung (Q20+, Q20-) erste piezoelektrische Ladung (Q20+) umfasst, welche erste piezoelektrische Ladung (Q20+) am invertierenden Eingang (i-) des Operationsverstärkers (61) anliegt; und dass die Wandlereinheit (6) die erste piezoelektrische Ladung (Q20+) in ein am Signalausgang (o) anliegendes Drucksignal (PS) verstärkt.

13. Sensorvorrichtung (1) gemäss Anspruch 12, **dadurch gekennzeichnet, dass** der Operationsverstärker (61) eine Arbeitsfrequenz (f61) aufweist, mit welcher Arbeitsfrequenz (f61) der Operationsverstärker (61) die erste piezoelektrische Ladung (Q20+) in ein Drucksignal (PS) verstärkt; dass die Rückkopplungskapazität (62) eine Grösse (C62) aufweist, welche Grösse (C62) eine Menge des durch die Rückkopplungskapazität (62) zum invertierenden Eingang (i-) zurückfliessenden Stromes bestimmt, welcher zurückfliessende Strom die erste piezoelektrische Ladung (Q20+) verstärkt; und dass eine Eingangsimpedanz (Z61) am invertierenden Eingang (i-) des Operationsverstärkers (61) umgekehrt proportional zum Produkt aus der Arbeitsfrequenz (f61) des Operationsverstärkers (61) mit der Grösse (C62) der Rückkopplungskapazität (62) ist:

$$Z61 \propto \frac{1}{f61 * C62}$$

**14.** Sensorvorrichtung (1) gemäss Anspruch 13, **dadurch gekennzeichnet, dass** die Eingangsimpedanz (Z61) am invertierenden Eingang (i-) des Operationsverstärkers (61) über eine Abgleichimpedanz (Z6) mit der Wellenimpedanz (Z5) der Ableitung (5) abgeglichen ist; und dass die Abgleichimpedanz (Z6) elektrisch zwischen ein Ende der Ableitung (5) zum invertierenden Eingang (i-) des Operationsverstärkers (61) und den invertierenden Eingang (i-) des Operationsverstärkers (61) geschaltet ist.

**15.** Sensorvorrichtung (1) gemäss Anspruch 14, **dadurch gekennzeichnet, dass** die Abgleichimpedanz (Z6) in der Grössenordnung der Wellenimpedanz (Z5) der Ableitung (5) ist.

**16.** Sensorvorrichtung (1) gemäss Anspruch 15, **dadurch gekennzeichnet, dass** für die Wellenimpedanz (Z5) einer Ableitung (5) in der Ausführungsform einer Koaxialleitung von 50 Ω oder 75 Ω die Abgleichimpedanz (Z6) kleiner/gleich dieser Wellenimpedanz (Z5) einer Koaxialleitung von 50 Ω oder 75 Ω ist; oder dass für die Wellenimpedanz (Z5) einer Ableitung (5) in der Ausführungsform einer Zweidrahtleitung im Bereich von 100 Ω bis 300 Ω die Abgleichimpedanz (Z6) kleiner/gleich dieser Wellenimpedanz (Z5) dieser Zweidrahtleitung im Bereich von 100 Ω bis 300 Ω ist.

**17.** Sensorvorrichtung (1) gemäss einem der Ansprüche 13 bis 16, **dadurch gekennzeichnet, dass** die Arbeitsfrequenz (f61) des Operationsverstärkers (61) grösser/gleich 1/3 der Eigenfrequenz (f1) von grösser/gleich 1 MHz der Sensorvorrichtung (1) ist.

Fig. 1

Fig. 2

Fig. 3

Fig. 4

Fig. 5

EUROPÄISCHER RECHERCHENBERICHT

Nummer der Anmeldung

EP 25 21 6996

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/350779 A1 (TADIGADAPA SRINIVAS [US] ET AL) 7. Dezember 2017 (2017-12-07) <br> * Abbildungen 3A-3B * <br> * Absätze [0007], [0026] * <br> * Ansprüche 1, 3, 8, 10, 12, 14, 16, 18 * <br> ----- | 1-17 | INV. <br> G01L9/00 |
| A | US 2009/146230 A1 (TAKIZAWA TERUO [JP]) 11. Juni 2009 (2009-06-11) <br> * Absatz [0075] * <br> ----- | 1-17 | |

RECHERCHIERTE SACHGEBIETE (IPC)

G01L

Der vorliegende Recherchenbericht wurde für alle Patentansprüche erstellt

| Recherchenort | Abschlußdatum der Recherche | Prüfer |
|---|---|---|
| Den Haag | 23. März 2026 | Oppo, Carla Ivana |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 21 6996

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2026

| Im Recherchenbericht angeführtes Patentdokument | Datum der Veröffentlichung | Mitglied(er) der Patentfamilie | Datum der Veröffentlichung |
|---|---|---|---|
| US 2017350779 A1 | 07-12-2017 | CN 109154533 A | 04-01-2019 |
| | | EP 3420332 A1 | 02-01-2019 |
| | | JP 2019519763 A | 11-07-2019 |
| | | KR 20190011737 A | 07-02-2019 |
| | | SG 11201808732R A | 29-11-2018 |
| | | TW 201743038 A | 16-12-2017 |
| | | US 2017350779 A1 | 07-12-2017 |
| | | WO 2017210184 A1 | 07-12-2017 |
| US 2009146230 A1 | 11-06-2009 | CN 101458134 A | 17-06-2009 |
| | | JP 4600468 B2 | 15-12-2010 |
| | | JP 2009139339 A | 25-06-2009 |
| | | US 2009146230 A1 | 11-06-2009 |

EPO FORM P0461

Für nähere Einzelheiten zu diesem Anhang : siehe Amtsblatt des Europäischen Patentamts, Nr.12/82